# FASCICULE DE BREVET EUROPEEN

(11) **EP 2 963 545 B1**
(45) Date de publication et mention de la délivrance du brevet: **31.08.2022**
(21) Numéro de dépôt: 15174509.8
(22) Date de dépôt: 30.06.2015
(51) Int. Cl.: G06F 3/04815, G06F 3/04855, G06F 3/04886, G06F 9/4401, G06F 3/0483, H04M 1/725, G06F 3/0485, H04M 1/72427

(54) **PROCÉDÉ D'AFFICHAGE D'UNE NOUVELLE FENÊTRE RECTANGULAIRE SUR UN ÉCRAN**
ANZEIGEVERFAHREN EINES NEUEN RECHTECKIGEN FENSTERS AUF EINEM BILDSCHIRM
METHOD OF DISPLAYING A NEW RECTANGULAR WINDOW ON A SCREEN

(30) Priorité: 30.06.2014 FR 1456218
(43) Date de publication de la demande: 06.01.2016
(73) Titulaire: Orange, 92130 Issy-les-Moulineaux (FR)
(72) Inventeur: BERTECHE, Olivier, 14112 Bieville Beuville (FR); BARTHE, Nicolas, 14210 Esquay Notre Dame (FR); MATHIS, Jean-Noël, 14280 Authie (FR); LEMEE, Christophe, 14760 Bretteville sur Odon (FR)

(56) Documents cités:
- WO-A1-2010/001326
- WO-A2-2009/143076
- US-A1- 2011 055 753
- US-A1- 2013 191 775
- TERO HAKALA ET AL: "Mobile Photo Browsing with Pipelines and Spatial Cues", 1 janvier 2005 (2005-01-01), HUMAN-COMPUTER INTERACTION - INTERACT 2005 LECTURE NOTES IN COMPUTER SCIENCE;;LNCS, SPRINGER, BERLIN, DE, PAGE(S) 227 - 239, XP019018982, ISBN: 978-3-540-28943-2 * le document en entier *
- Message Oops: "OFFICE 2013 QUICK START GUIDE", Champion Solutions Group documents on line, 22 novembre 2013 (2013-11-22), pages 1-58, XP055206722, Extrait de l'Internet: URL:http://www.messageops.com/wp-content/u ploads/2013/11/MessageOps-Office-2013-Quic kstart-Guide.pdf [extrait le 2015-08-06]
- NILSSON ET AL: "Design patterns for user interface for mobile applications", ADVANCES IN ENGINEERING SOFTWARE, ELSEVIER SCIENCE, OXFORD, GB, vol. 40, no. 12, 1 December 2009 (2009-12-01), pages 1318-1328, XP026471073, ISSN: 0965-9978, DOI: 10.1016/J.ADVENGSOFT.2009.01.017 [retrieved on 2009-04-25]

## Description

### Arrière-plan de l'invention

L'invention se situe dans le domaine des interfaces graphiques.

Dans l'état actuel de la technique, il est usuel, lorsque l'on veut afficher un nouveau contenu sur un écran, d'ouvrir une nouvelle fenêtre pour ce contenu.

Cette solution, bien que très avantageuse, présente l'inconvénient de masquer le contenu qui était affiché à l'endroit occupé par cette nouvelle fenêtre. Pour accéder à nouveau à ce contenu, l'utilisateur peut déplacer cette nouvelle fenêtre, et par conséquent, masquer un autre contenu, ou fermer la nouvelle fenêtre.

WO 2009/143076 A2 (PALM INC [US]; SHIPLACOFF DANIEL MARC GATAN [US]; DUARTE MATIAS GONZAL), 26 novembre 2009, divulgue un procédé d'affichage d'une nouvelle fenêtre rectangulaire dans une zone d'affichage sur un écran comportant déjà au moins une première fenêtre rectangulaire. Dans ce procédé d'affichage, la nouvelle fenêtre est affichée progressivement vers l'intérieur et à partir d'un bord de la première fenêtre. Le contenu de la première fenêtre est décalé à partir dudit bord, sur une distance correspondant à la dimension de ladite nouvelle fenêtre selon une deuxième direction perpendiculaire à une première direction parallèle audit bord. La nouvelle fenêtre est affichée, le long dudit bord, cet affichage ayant pour effet de diminuer d'autant ladite première fenêtre selon ladite deuxième direction une fois que toute la nouvelle fenêtre a été affichée.

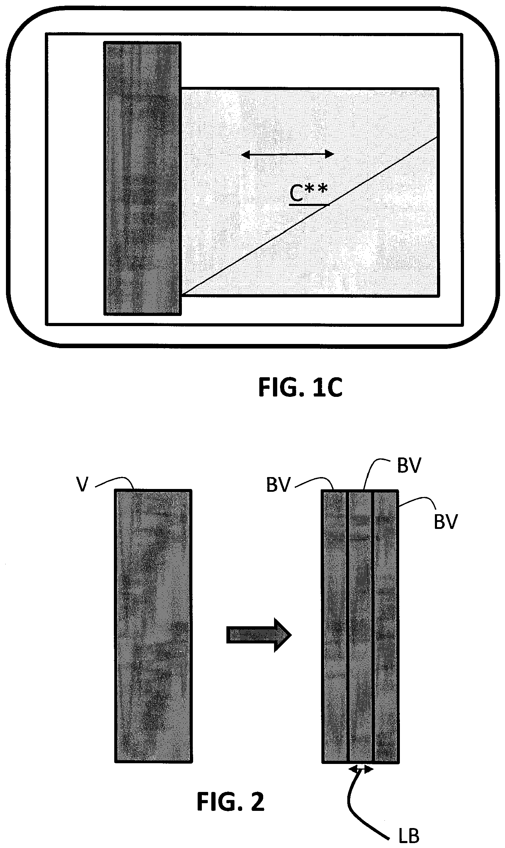

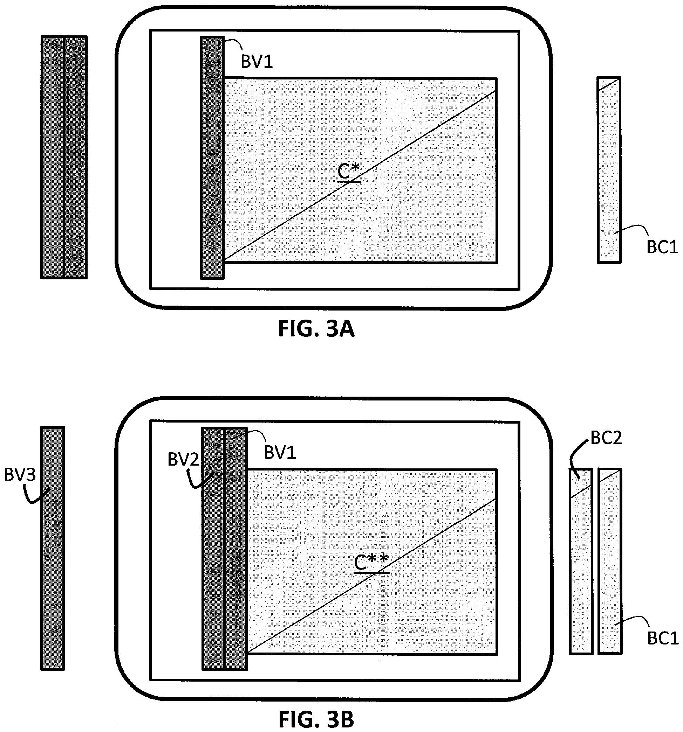

WO 2010/001326 A1 (NOKIA CORP [FI]; MCCARTHY PATRICK [GB]), 7 janvier 2010, divulgue, en particulier aux figures 2a-c et 3a-3d, une interface utilisateur d'un écran tactile d'un téléphone mobile. Lorsqu'une vidéo est affichée dans une première fenêtre, et qu'un utilisateur approche le doigt de l'écran ou en sélectionne un bouton physique sur le rebord du téléphone, l'utilisateur déclenche l'apparition d'une nouvelle fenêtre comportant un menu. Ce menu peut venir se loger sous la première fenêtre affichant la vidéo, la vidéo étant alors redimensionnée pour éviter tout chevauchement du menu avec la vidéo. Le contenu de la première fenêtre est donc soit visible de façon réduite.

NILSSON ET AL: "Design patterns for user interface for mobile applications", ADVANCES IN ENGINEERING SOFTWARE, ELSEVIER SCIENCE, OXFORD, GB, vol. 40, no. 12, 1 décembre 2009 (2009-12-01), pages 1318-1328, XP026471 073, divulgue un procédé d'affichage d'une nouvelle fenêtre rectangulaire dans une zone d'affichage sur un écran d'un dispositif d'affichage, ladite zone d'affichage comportant déjà au moins une première fenêtre rectangulaire, la nouvelle fenêtre étant affichée vers l'intérieur et à partir d'un emplacement initial d'un bord de la première fenêtre dans la zone d'affichage. Dans la figure 5 de ce document, une partie du contenu de la première fenêtre est décalée à partir dudit bord et une autre partie est déformée et redimensionnée.

L'invention vise une méthode d'affichage de contenu qui ne présente pas les inconvénients mentionnés ci-dessus.

### Objet et résumé de l'invention

Plus précisément, l'invention vise un procédé d'affichage d'une nouvelle fenêtre rectangulaire dans une zone d'affichage sur un écran, cette zone d'affichage comportant une première fenêtre rectangulaire, la nouvelle fenêtre étant affichée progressivement vers l'intérieur et à partir d'un bord de la première fenêtre.

Autrement dit, la nouvelle fenêtre s'affiche progressivement vers l'intérieur de la zone occupée initialement par la première fenêtre, à partir de l'emplacement initial (i.e. avant l'affichage de la nouvelle fenêtre) d'un bord de la première fenêtre.

Le procédé comporte des étapes comme définies à la revendication 1.

Le procédé d'affichage selon l'invention permet ainsi d'afficher une ou plusieurs fenêtres supplémentaires (ou volets) tout en gardant la possibilité d'accéder à l'intégralité du contenu initial de la première fenêtre selon un mécanisme de défilement (en anglais « scrolling »).

Lors de l'affichage de la nouvelle fenêtre, le décalage du contenu de la première fenêtre s'effectue de manière générale sans déformation.

Ce procédé d'affichage a une application privilégiée mais non limitative dans le contexte d'écrans de petite taille et/ou pour lesquels il n'est pas possible d'afficher simultanément plusieurs fenêtres sans agir au préalable sur une caractéristique de l'affichage courant, par exemple en masquant ou en redimensionnant une fenêtre déjà affichée tout en conservant son contenu (c'est-à-dire en déformant le contenu de cette fenêtre, par exemple en diminuant la taille de ce contenu).

En se déployant, la nouvelle fenêtre semble pousser le contenu de la première fenêtre et réduit d'autant la première fenêtre.

Dans un mode particulier de réalisation, la dimension de la nouvelle fenêtre selon une première direction parallèle au bord est supérieure ou égale à la dimension de ce bord.

Dans un mode de réalisation de l'invention, le contenu initial de la fenêtre n'est pas déformé.

Dans un mode préféré de réalisation, le contenu initial de la fenêtre n'est pas redimensionné. Dans un mode particulier de réalisation, on peut également permettre le défilement du contenu dans la nouvelle fenêtre, horizontalement et/ou verticalement.

Le fait d'afficher la nouvelle fenêtre par bandes (éventuellement de largeur 1 pixel) successives permet de faire ressentir à l'utilisateur une impression de déploiement de cette nouvelle fenêtre.

Dans un mode particulier de réalisation, la nouvelle fenêtre est découpée en bandes de 1 pixel. Ce mode de réalisation permet d'afficher le contenu de la nouvelle fenêtre de façon très progressive et non agressive pour l'utilisateur.

Dans un autre mode de réalisation, la nouvelle fenêtre est découpée en bandes de dimensions croissantes ou décroissantes de façon à créer un effet d'accélération ou de décélération dans l'affichage de cette nouvelle fenêtre.

Dans un mode particulier de réalisation, la nouvelle fenêtre est affichée sur détection d'une commande d'ouverture.

Dans un mode particulier de réalisation, la nouvelle fenêtre peut être refermée de sorte à récupérer la place occupée par cette nouvelle fenêtre pour redimensionner la première fenêtre.

Plus précisément, dans ce mode de réalisation, sur détection d'une commande de fermeture, le procédé d'affichage selon l'invention comporte des étapes pour :
- effacer la nouvelle fenêtre de la zone d'affichage ;
- agrandir la première fenêtre par le bord précité et décaler son contenu initial selon la deuxième direction, vers ce bord, sur une distance correspondant à la dimension de la nouvelle fenêtre selon cette deuxième direction.

Dans un mode particulier de réalisation, la zone d'affichage comporte une pluralité de premières fenêtres rectangulaires qui ne se superposent pas, juxtaposées ou non.

Dans un mode particulier de réalisation, la dimension de la nouvelle fenêtre selon la deuxième dimension est légèrement inférieure à cette dimension d'une première fenêtre.

Ainsi, lorsque la nouvelle fenêtre se déploie, la première fenêtre la plus éloignée parmi toutes ces premières fenêtres affichées est effacée sur presque toute sa surface, donnant l'impression de sortir progressivement de l'écran comme poussée par la nouvelle fenêtre. La bande de cette première fenêtre encore visible permet de rappeler à l'utilisateur que du contenu initial peut être accédé par défilement.

Dans un mode particulier de réalisation, la nouvelle fenêtre comporte un menu permettant de déclencher l'affichage de nouveaux contenus dans la première fenêtre.

L'invention vise aussi un dispositif d'affichage tel que défini à la revendication 12.

Dans un mode particulier de réalisation, les différentes étapes du procédé d'affichage sont déterminées par des instructions de programmes d'ordinateurs.

En conséquence, l'invention vise un programme d'ordinateur sur un support d'informations, ce programme comportant des instructions pour l'exécution desdites étapes d'un procédé d'affichage tel que mentionné ci-dessus, lorsque ces instructions sont exécutées par un ordinateur.

L'invention vise aussi un programme d'ordinateur sur un support d'informations comportant des instructions pour l'exécution desdites étapes d'un procédé d'affichage tel que mentionné ci-dessus lorsque ces instructions sont exécutées par un procédé d'affichage tel que mentionné ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de l'invention apparaîtront à la lumière de la description qui suit, faite en référence aux dessins annexés dans lesquels :
- les figures 1A à 1C illustrent un exemple de mise en œuvre de l'invention dans son principe ;
- la figure 2 illustre le découpage d'une nouvelle fenêtre en bandes parallèles ;
- les figures 3A à 5 représentent le contenu d'un écran après différentes étapes d'un procédé d'affichage de deux nouvelles fenêtres conformément à un exemple de mise en œuvre de l'invention;
- la figure 6 représente sous forme d'organigramme, les principales étapes d'un procédé d'affichage conforme à un mode de réalisation de l'invention ;
- les figures 7 à 9 illustrent un exemple de mise en œuvre de l'invention dans lequel le contenu est compris dans une pluralité de fenêtres juxtaposées.

### Description détaillée d'un mode de réalisation

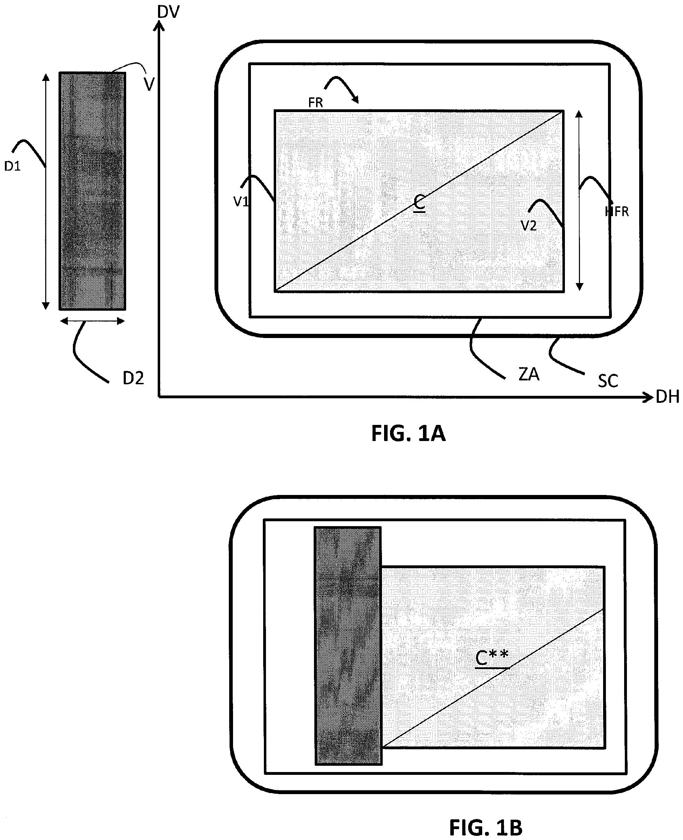

Les figures 1A à 1C illustrent un exemple de mise en œuvre de l'invention dans son principe.

Sur la figure 1A, on a représenté un écran d'ordinateur SC comportant une zone d'affichage ZA dans laquelle est affichée une première fenêtre rectangulaire FR, le contenu initial de cette fenêtre étant référencé C.

On note HFR la hauteur de cette fenêtre, DV la direction verticale et DH la direction horizontale.

On suppose dans cet exemple que l'on veut afficher une première nouvelle fenêtre rectangulaire V, conformément à l'invention, selon un déploiement progressif horizontal, à partir d'un bord vertical V1 de la première fenêtre FR, vers l'intérieur de cette première fenêtre. Soit V2, le bord vertical opposé à V1.

Dans cet exemple, la dimension verticale D1 de cette nouvelle fenêtre V est supérieure à la dimension HFR du bord V1. On note D2 la dimension horizontale de cette nouvelle fenêtre.

La figure 1B illustre le résultat de cette étape d'affichage : la nouvelle fenêtre V a poussé le contenu C de la première fenêtre horizontalement, sans le redimensionner, sur une distance D2, si bien qu'un nouveau contenu C^{∗∗} est affiché dans la première fenêtre. La dimension horizontale de la première fenêtre FR est réduite d'autant, c'est-à-dire de la largeur D2.

La figure 1C illustre qu'il est possible d'accéder à l'intégralité du contenu initial de la première fenêtre par défilement de ce contenu (en anglais « scrolling »). Ce mécanisme donne l'illusion, lorsque le contenu initial défile vers la gauche, que le contenu initial glisse sous la nouvelle fenêtre V.

Dans l'exemple de réalisation décrit ici, le défilement du contenu dans la nouvelle fenêtre V est impossible. On dit que ce contenu est figé.

A titre d'alternative, le défilement horizontal et/ou vertical dans la nouvelle fenêtre est possible.

Afin de réaliser l'affichage de cette nouvelle fenêtre de façon progressive, le contenu de la nouvelle fenêtre V est découpé en bandes BV parallèles au bord V1, trois dans cet exemple, au cours d'une étape E20. Ce découpage n'est pas réalisé si la nouvelle fenêtre V doit être affichée en une seule fois.

La figure 2 illustre ce découpage dans le cas particulier mais optionnel dans lequel les bandes ont toutes la même largeur LB.

La figure 3A illustre le résultat du procédé après l'affichage de la première bande BV1 de la nouvelle fenêtre. On note :
- qu'une bande rectangulaire BC1 du contenu initial C de la première fenêtre n'est plus affichée. Le contenu de cette bande BC1 est mémorisé ainsi que la position de cette bande dans le contenu initial (étape E30) afin de pouvoir permettre d'accéder à tout ce contenu initial C par défilement ;
- que le contenu initial C a été décalé (étape E40) selon la direction horizontale DH, à partir du bord V1 sur une distance correspondant à la dimension horizontale LB de la bande BV1.
- que la bande BV1 a été affichée le long du bord vertical V1 (étape E50).
- que le contenu initial C peut être reconstitué à partir du contenu affiché C^{∗} et du contenu de la bande BC1.

La figure 3B illustre le résultat du procédé après l'affichage de la deuxième bande BV2 de la nouvelle fenêtre V, une deuxième bande BC2 du contenu initial C ayant été effacée de l'écran et mémorisée avec sa position dans le contenu initial.

Le contenu initial C peut ainsi être reconstitué à partir du contenu affiché C^{∗∗} et du contenu des bandes BC1 et BC2.

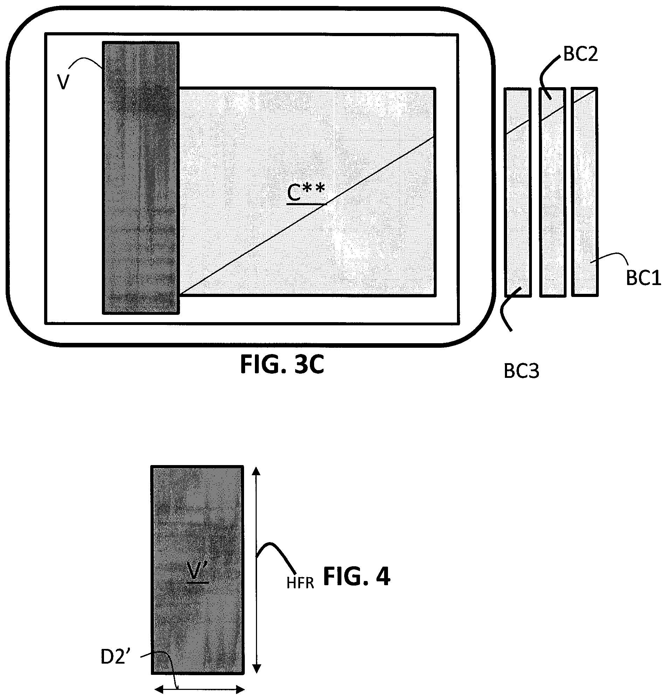

La figure 3C illustre le résultat du procédé après l'affichage de la troisième bande BV3 de la nouvelle fenêtre V. Cette figure est identique à la figure 3B sauf en ce que l'on a représenté la troisième bande BC3 du contenu initial telle que mémorisée.

On suppose maintenant que l'on veut afficher une nouvelle fenêtre rectangulaire V' représentée à la figure 4 de hauteur HFR et de largeur D2' le long du bord V2 de la fenêtre FR.

Dans cet exemple, cette nouvelle fenêtre V' est affichée en une seule fois et n'est donc pas découpée.

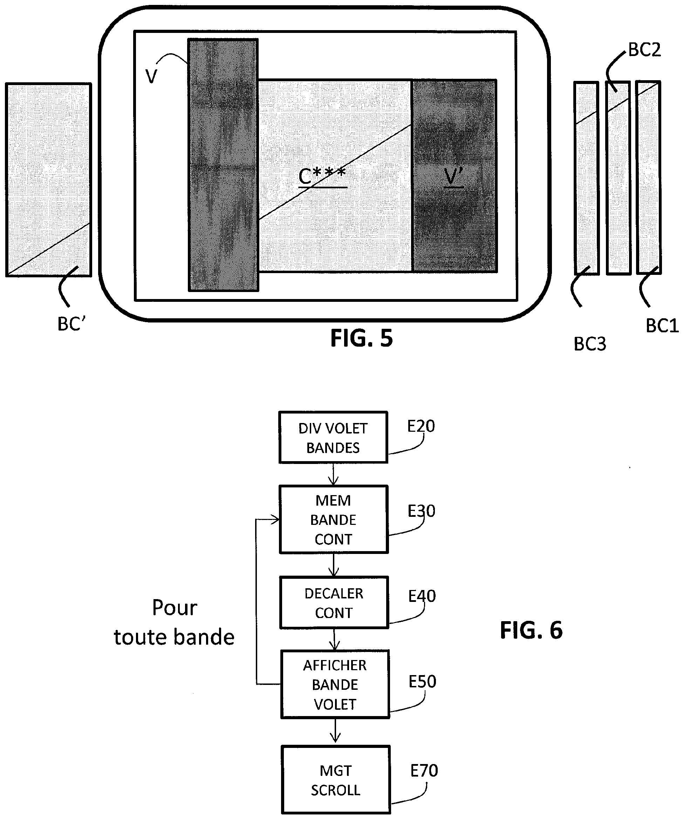

La figure 5 représente le résultat du procédé après l'affichage de cette nouvelle fenêtre V'. On note :
- que le contenu de la première fenêtre FR a été décalé horizontalement à partir du bord V2 sur une distance correspondant à la largeur D2' de la nouvelle fenêtre V'. Cela donne l'illusion de faire glisser le contenu sous la fenêtre V ;
- que la largeur de la première fenêtre FR a été diminuée de cette largeur D2' ;
- qu'une bande rectangulaire BC' du contenu initial de la fenêtre FR, de largeur D2' et masqué par la fenêtre V est mémorisée (avec sa position dans le contenu initial) ;
- que la nouvelle fenêtre V' a été affichée le long du bord vertical V2.

Conformément à l'invention, le contenu initial de la première fenêtre FR, autrement dit le contenu C^{∗∗∗} affiché sur l'écran et les bandes de contenu mémorisées (BC1, BC2, BC3, BC') peuvent défiler entre les nouvelles fenêtres V et V'.

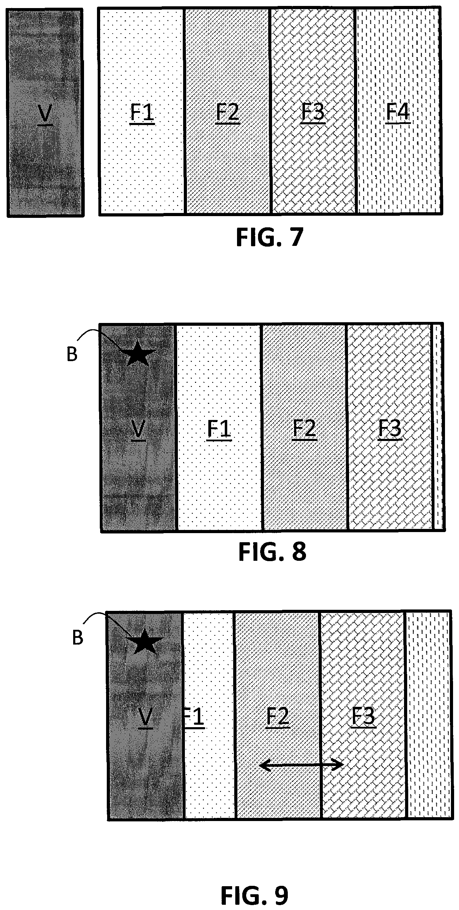

A la figure 7, on a représenté une zone d'affichage comportant 4 fenêtres rectangulaires F1 à F4 de mêmes dimensions et juxtaposées et à la figure 8, le contenu de la zone d'affichage après avoir affiché une nouvelle fenêtre V dont la largeur est de peu inférieure à la largeur de ces fenêtres.

Il apparaît sur cette figure que les fenêtres F1 à F4 ont été décalées et qu'il ne reste visible qu'une petite bande de la fenêtre F4.

Cette petite bande incite l'utilisateur à faire défiler le contenu affiché pour accéder à l'ensemble du contenu comme représenté à la figure 9, le contenu donnant l'illusion de glisser sous la nouvelle fenêtre V au cours de ce défilement.

Ainsi, dans le mode de réalisation décrit ici, les étapes de décalage, d'affichage et de gestion s'appliquent à l'entité constituée de la pluralité de fenêtres F1 à F4.

Dans le mode de réalisation décrit ici, la nouvelle fenêtre V se déploie dès lors que l'utilisateur clique deux fois sur une des fenêtres.

Dans le mode de réalisation décrit ici, la nouvelle fenêtre V comporte, lorsqu'elle est déployée un bouton B, un appui sur ce bouton ayant pour effet de refermer cette nouvelle fenêtre V et revenir à l'état de la figure 7.

On rappelle que conformément à l'invention, une nouvelle fenêtre se déploie progressivement ou s'affiche directement à partir du bord d'une première fenêtre déjà affichée. Dans un mode particulier de réalisation décrit ici, cette nouvelle fenêtre peut comporter un menu permettant à l'utilisateur de déclencher l'affichage de nouveaux contenus dans la première fenêtre.

L'invention peut en particulier être utilisée dans une application de lecture de fichiers musicaux. Par exemple, une première fenêtre au sens de l'invention peut contenir des métadonnées d'un album musical ; lorsqu'on clique sur cette fenêtre, une nouvelle fenêtre comportant un lecteur se déploie en empiétant sur la première fenêtre tout en permettant par défilement un accès à l'ensemble des métadonnées.

Une commande présente dans la nouvelle fenêtre peut, dans un mode de réalisation particulier, permettre de changer l'album affiché dans la première fenêtre.

## Revendications

1. Procédé d'affichage d'une nouvelle fenêtre rectangulaire (V) dans une zone d'affichage (ZA) sur un écran (SC) d'un dispositif d'affichage, ladite zone d'affichage comportant déjà au moins une première fenêtre rectangulaire (FR), la nouvelle fenêtre étant affichée progressivement vers l'intérieur et à partir d'un emplacement initial d'un bord (V1) de la première fenêtre (FR) dans la zone d'affichage, ledit procédé comportant des étapes pour
- décaler (E40) le contenu de la première fenêtre à partir de l'emplacement initial dudit bord (V1), sur une distance correspondant à la dimension de ladite nouvelle fenêtre selon une deuxième direction (DH) perpendiculaire à une première direction (DV) parallèle audit bord (V1), ledit décalage étant réalisé sans causer de déformation du contenu initial de la première fenêtre;
- afficher (E50) la nouvelle fenêtre, le long de l'emplacement initial dudit bord (V1), cet affichage ayant pour effet de diminuer d'autant ladite première fenêtre (FR) selon ladite deuxième direction de sorte que l'ensemble du contenu initial de la première fenêtre soit accessible dans la première fenêtre par défilement du contenu initial dans la première fenêtre (FR), une fois que toute la nouvelle fenêtre a été affichée;
dans lequel ladite nouvelle fenêtre est découpée en une pluralité de bandes (BV) parallèles audit bord (V1) et pour chacune desdites bandes :
• ledit contenu initial de la première fenêtre est décalé à partir dudit bord (V1) sur une
distance correspondant à la dimension (LB) de ladite bande selon ladite deuxième direction (DH) ; et
• la bande de la nouvelle fenêtre est affichée le long dudit bord (V1).

2. Procédé selon la revendication 1 **caractérisé en ce que** la dimension (D1) de la nouvelle fenêtre selon une première direction (DV) parallèle audit bord (V1) est supérieure ou égale à la dimension (HFR) de ce bord (V1).

3. Procédé selon la revendication 1 ou 2 **caractérisé en ce que** ladite nouvelle fenêtre est découpée en bandes de 1 pixel.

4. Procédé selon la revendication 1 ou 2 **caractérisé en ce que** ladite nouvelle fenêtre est découpée en bandes de dimensions croissantes ou décroissantes.

5. Procédé selon l'une quelconque des revendications 1 à 4, **caractérisé en ce que** ladite nouvelle fenêtre est affichée sur détection d'une commande 5 d'ouverture.

6. Procédé selon l'une quelconque des revendications 1 à 5, **caractérisé en ce qu'**il comporte, sur détection d'une commande de fermeture :
- effacer ladite nouvelle fenêtre (V) de ladite zone d'affichage ;
- agrandir la première fenêtre (FR) par ledit bord (V1) et décaler son contenu initial selon ladite deuxième direction (DH), vers ledit bord (V1), sur une distance correspondant à la dimension de ladite nouvelle fenêtre (V) selon cette deuxième direction.

7. Procédé selon l'une quelconque des revendications 1 à 6, dans lequel ladite zone d'affichage (ZA) comporte une pluralité de premières fenêtres rectangulaires (F1, F2, F3, F4) qui ne se superposent pas.

8. Procédé selon la revendication 7, caractérisé en ce la dimension de ladite nouvelle fenêtre selon ladite deuxième dimension est légèrement inférieure à cette dimension d'une dite première fenêtre (F4).

9. Procédé selon l'une quelconque des revendications 1 à 8, **caractérisé en ce que** ladite nouvelle fenêtre (V) comporte un menu permettant de déclencher l'affichage de nouveaux contenus dans la première fenêtre (FR).

10. Programme d'ordinateur comportant des instructions pour l'exécution des étapes d'un procédé selon l'une quelconque des revendications 1 à 9 lorsque ces instructions sont exécutées par un ordinateur.

11. Support d'enregistrement lisible par un ordinateur sur lequel est enregistré un programme d'ordinateur comprenant des instructions pour l'exécution desdites étapes d'un procédé selon l'une quelconque des revendications 1 à 9.

12. Dispositif d'affichage d'une nouvelle fenêtre rectangulaire (V) dans une zone d'affichage (ZA) sur un écran (SC), ladite zone d'affichage comportant déjà au moins une première fenêtre rectangulaire (FR), la nouvelle fenêtre étant affichée progressivement vers l'intérieur et à partir d'un emplacement initial d'un bord (V1) de la première fenêtre (FR) dans la zone d'affichage, ledit dispositif comportant des moyens pour :
- décaler (E40) le contenu de la première fenêtre à partir de l'emplacement initial dudit bord (V1), sur une distance correspondant à la dimension (BV) de ladite nouvelle fenêtre selon une deuxième direction (DH) perpendiculaire à une première direction (DV) parallèle audit bord (V1), ledit décalage étant réalisé sans causer de déformation du contenu initial de la première fenêtre;
- afficher (E50) la nouvelle fenêtre, le long dudit bord (V1), cet affichage ayant pour effet de diminuer d'autant ladite première fenêtre (FR) selon ladite deuxième direction de sorte que l'ensemble du contenu initial de la première fenêtre soit accessible dans la première fenêtre par défilement du contenu initial dans la première fenêtre (FR), une fois que toute la nouvelle fenêtre a été affichée;
dans lequel le dispositif d'affichage est configuré pour découper ladite nouvelle fenêtre en une pluralité de bandes (BV) parallèles audit bord (V1) et pour chacune desdites bandes :
• ledit contenu initial de la première fenêtre est décalé à partir dudit bord (V1) sur une
distance correspondant à la dimension (LB) de ladite bande selon ladite deuxième direction (DH) ; et
• la bande de la nouvelle fenêtre est affichée le long dudit bord (V1)

## Patentansprüche

1. Verfahren zur Anzeige eines neuen rechteckigen Fensters (V) in einem Anzeigebereich (ZA) auf einem Bildschirm (SC) einer Anzeigevorrichtung, wobei der Anzeigebereich bereits mindestens ein erstes rechteckiges Fenster (FR) aufweist, wobei das neue Fenster progressiv nach innen und ausgehend von einer ursprünglichen Stelle eines Rands (V1) des ersten Fensters (FR) im Anzeigebereich angezeigt wird, wobei das Verfahren Schritte aufweist, um:
- den Inhalt des ersten Fensters ausgehend von der ursprünglichen Stelle des Rands (V1) über eine Strecke entsprechend der Abmessung des neuen Fensters gemäß einer zweiten Richtung (DH) lotrecht zu einer ersten Richtung (DV) parallel zum Rand (V1) zu verschieben (E40), wobei die Verschiebung durchgeführt wird, ohne eine Verformung des ursprünglichen Inhalts des ersten Fensters zu verursachen;
- das neue Fenster entlang der ursprünglichen Stelle des Rands (V1) anzuzeigen (E50), wobei diese Anzeige zur Wirkung hat, das erste Fenster (FR) gemäß der zweiten Richtung im gleichen Maß zu verkleinern, so dass die Gesamtheit des ursprünglichen Inhalts des ersten Fensters im ersten Fenster durch Vorbeilauf des ursprünglichen Inhalts im ersten Fenster (FR) zugänglich ist, sobald das ganze neue Fenster angezeigt worden ist;
wobei das neue Fenster in eine Vielzahl von Streifen (BV) parallel zum Rand (V1) zerschnitten wird und für jeden der Streifen:
• der ursprüngliche Inhalt des ersten Fensters ausgehend vom Rand (V1) über eine Strecke entsprechend der Abmessung (LB) des Streifens gemäß der zweiten Richtung (DH) verschoben wird; und
• der Streifen des neuen Fensters entlang des Rands (V1) angezeigt wird.

2. Verfahren nach Anspruch 1, **dadurch gekennzeichnet, dass** die Abmessung (D1) des neuen Fensters gemäß einer ersten Richtung (DV) parallel zum Rand (V1) größer als die oder gleich der Abmessung (HFR) dieses Rands (V1) ist.

3. Verfahren nach Anspruch 1 oder 2, **dadurch gekennzeichnet, dass** das neue Fenster in Streifen von 1 Pixel zerschnitten wird.

4. Verfahren nach Anspruch 1 oder 2, **dadurch gekennzeichnet, dass** das neue Fenster in Streifen zunehmender oder abnehmender Abmessungen zerschnitten wird.

5. Verfahren nach einem der Ansprüche 1 bis 4, **dadurch gekennzeichnet, dass** das neue Fenster bei Erfassung eines Öffnungsbefehls 5 angezeigt wird.

6. Verfahren nach einem der Ansprüche 1 bis 5, **dadurch gekennzeichnet, dass** es bei Erfassung eines Schließbefehls aufweist:
- Löschen des neuen Fensters (V) aus dem Anzeigebereich;
- Vergrößern des ersten Fensters (FR) durch den Rand (V1) und Verschieben seines ursprünglichen Inhalts gemäß der zweiten Richtung (DH) zum Rand (V1) über eine Strecke entsprechend der Abmessung des neuen Fensters (V) gemäß dieser zweiten Richtung.

7. Verfahren nach einem der Ansprüche 1 bis 6, wobei der Anzeigebereich (ZA) eine Vielzahl erster rechteckiger Fenster (F1, F2, F3, F4) aufweist, die sich nicht überlappen.

8. Verfahren nach Anspruch 7, **dadurch gekennzeichnet, dass** die Abmessung des neuen Fensters gemäß der zweiten Abmessung geringfügig kleiner als diese Abmessung eines ersten Fensters (F4) ist.

9. Verfahren nach einem der Ansprüche 1 bis 8, **dadurch gekennzeichnet, dass** das neue Fenster (V) ein Menü aufweist, das es ermöglicht, die Anzeige neuer Inhalte im ersten Fenster (FR) auszulösen.

10. Computerprogramm, das Anweisungen zur Ausführung der Schritte eines Verfahrens nach einem der Ansprüche 1 bis 9 aufweist, wenn diese Anweisungen von einem Computer ausgeführt werden.

11. Computerlesbarer Speicherträger, auf dem ein Computerprogramm gespeichert ist, das Anweisungen zur Ausführung der Schritte eines Verfahrens nach einem der Ansprüche 1 bis 9 enthält.

12. Anzeigevorrichtung eines neuen rechteckigen Fensters (V) in einem Anzeigebereich (ZA) auf einem Bildschirm (SC), wobei der Anzeigebereich bereits mindestens ein erstes rechteckiges Fenster (FR) aufweist, wobei das neue Fenster progressiv nach innen und ausgehend von einer ursprünglichen Stelle eines Rands (V1) des ersten Fensters (FR) im Anzeigebereich angezeigt wird, wobei die Vorrichtung Einrichtungen enthält, um:
- den Inhalt des ersten Fensters ausgehend von der ursprünglichen Stelle des Rands (V1) über eine Strecke entsprechend der Abmessung (BV) des neuen Fensters gemäß einer zweiten Richtung (DH) lotrecht zu einer ersten Richtung (DV) parallel zum Rand (V1) zu verschieben (E40), wobei die Verschiebung durchgeführt wird, ohne eine Verformung des ursprünglichen Inhalts des ersten Fensters zu verursachen;
- das neue Fenster entlang des Rands (V1) anzuzeigen (E50), wobei diese Anzeige zur Wirkung hat, das erste Fenster (FR) gemäß der zweiten Richtung im gleichen Maß zu verkleinern, so dass die Gesamtheit des ursprünglichen Inhalts des ersten Fensters im ersten Fenster durch Vorbeilauf des ursprünglichen Inhalts im ersten Fenster (FR) zugänglich ist, sobald das ganze neue Fenster angezeigt worden ist;
wobei die Anzeigevorrichtung konfiguriert ist, das neue Fenster in eine Vielzahl von Streifen (BV) parallel zum Rand (V1) zu zerschneiden und für jeden der Streifen:
• der ursprüngliche Inhalt des ersten Fensters ausgehend vom Rand (V1) über eine Strecke verschoben wird, die der Abmessung (LB) des Streifens gemäß der zweiten Richtung (DH) entspricht; und
• der Streifen des neuen Fensters entlang des Rands (V1) angezeigt wird.

## Claims

1. Method for displaying a new rectangular window (V) in a display area (ZA) on a screen (SC) of a display device, said display area already comprising at least one first rectangular window (FR), the new window being displayed progressively towards the inside and starting from an initial location of an edge (V1) of the first window (FR) in the display area, said method comprising steps of:
shifting (E40) the content of the first window starting from the initial location of said edge (VI), over a distance corresponding to the dimension of said new window in a second direction (DH) perpendicular to a first direction (DV) parallel to said edge (VI), said shifting being performed without causing any deformation of the initial content of the first window;
displaying (E50) the new window, along the initial location of said edge (VI), this display having the effect of decreasing said first window (FR) by the same amount in said second direction such that all of the initial content of the first window is accessible in the first window by scrolling through the initial content in the first window (FR), once the entire new window has been displayed;
wherein said new window is divided into a plurality of bands (BV) parallel to said edge (V1) and, for each of said bands:
said initial content of the first window is shifted from said edge (V1) over a distance corresponding to the dimension (LB) of said band in said second direction (DH); and
the band of the new window is displayed along said edge (V1).

2. Method according to Claim 1, **characterized in that** the dimension (D1) of the new window in a first direction (DV) parallel to said edge (V1) is greater than or equal to the dimension (HFR) of this edge (V1).

3. Method according to Claim 1 or 2, **characterized in that** said new window is divided into bands of 1 pixel.

4. Method according to Claim 1 or 2, **characterized in that** said new window is divided into bands of increasing or decreasing dimensions.

5. Method according to any one of Claims 1 to 4, **characterized in that** said new window is displayed upon detection of an opening command 5.

6. Method according to any one of Claims 1 to 5, **characterized in that** it comprises, upon detection of a closure command:
deleting said new window (V) from said display area;
magnifying the first window (FR) from said edge (V1) and shifting the initial content thereof in said second direction (DH), towards said edge (VI), over a distance corresponding to the dimension of said new window (V) in this second direction.

7. Method according to any one of Claims 1 to 6, wherein said display area (ZA) comprises a plurality of first rectangular windows (F1, F2, F3, F4) that do not overlap.

8. Method according to Claim 7, **characterized in that** the dimension of said new window in said second dimension is slightly less than this dimension of a said first window (F4).

9. Method according to any one of Claims 1 to 8, **characterized in that** said new window (V) contains a menu for triggering the display of new content in the first window (FR).

10. Computer program comprising instructions for executing the steps of a method according to any one of Claims 1 to 9 when these instructions are executed by a computer.

11. Computer-readable recording medium on which there is recorded a computer program comprising instructions for executing said steps of a method according to any one of Claims 1 to 9.

12. Device for displaying a new rectangular window (V) in a display area (ZA) on a screen (SC), said display area already comprising at least one first rectangular window (FR), the new window being displayed progressively towards the inside and starting from an initial location of an edge (V1) of the first window (FR) in the display area, said device comprising means for:
shifting (E40) the content of the first window starting from the initial location of said edge (VI), over a distance corresponding to the dimension (BV) of said new window in a second direction (DH) perpendicular to a first direction (DV) parallel to said edge (VI), said shifting being performed without causing any deformation of the initial content of the first window;
displaying (E50) the new window, along said edge (VI), this display having the effect of decreasing said first window (FR) by the same amount in said second direction such that all of the initial content of the first window is accessible in the first window by scrolling through the initial content in the first window (FR), once the entire new window has been displayed;
wherein the display device is configured to divide said new window into a plurality of bands (BV) parallel to said edge (V1) and, for each of said bands:
said initial content of the first window is shifted from said edge (V1) over a distance corresponding to the dimension (LB) of said band in said second direction (DH); and
the band of the new window is displayed along said edge (V1).
